(19) **Europäisches Patentamt European Patent Office Office européen des brevets**

(11) **EP 4 420 317 B1**

(12) **EUROPEAN PATENT SPECIFICATION**

(45) Date of publication and mention of the grant of the patent:
**28.05.2025 Bulletin 2025/22**

(21) Application number: **21960925.2**

(22) Date of filing: **20.10.2021**

(51) International Patent Classification (IPC):
***H04L 25/02*** *(2006.01)* ***H04B 17/373*** *(2015.01)*

(52) Cooperative Patent Classification (CPC):
**H04B 17/3913; H04L 25/0222**

(86) International application number:
**PCT/CN2021/125067**

(87) International publication number:
**WO 2023/065169 (27.04.2023 Gazette 2023/17)**

(54) **DETERMINATION OF AUTOREGRESSIVE MODEL ORDER FOR A CHANNEL PREDICTION FILTER**

BESTIMMUNG DER AUTOREGRESSIVEN MODELLREIHENFOLGE FÜR EIN KANALVORHERSAGEFILTER

DÉTERMINATION D'UN ORDRE DE MODÈLE AUTORÉGRESSIF POUR UN FILTRE DE PRÉDICTION DE CANAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**28.08.2024 Bulletin 2024/35**

(73) Proprietor: **Telefonaktiebolaget LM Ericsson (publ)**
**164 83 Stockholm (SE)**

(72) Inventors:
• **HOU, Xueying**
**222 74 Lund (SE)**
• **ZHOU, Wei**
**245 62 Staffanstorp (SE)**
• **APELFRÖJD, Rikke**
**741 30 Knivsta (SE)**
• **WANG, Zhao**
**187 61 Täby (SE)**

(74) Representative: **Ericsson Patent Development**
**Torshamnsgatan 21-23**
**164 80 Stockholm (SE)**

(56) References cited:
WO-A1-2014/139159    WO-A1-2021/164033
CN-A- 101 960 757    CN-A- 102 891 816
CN-A- 104 067 582    CN-A- 110 635 858
US-A1- 2007 092 012

• BARUAH MURCHANA ET AL: "AR-model of faded MIMO set-up optimized for ITU channels", 2015 2ND INTERNATIONAL CONFERENCE ON SIGNAL PROCESSING AND INTEGRATED NETWORKS (SPIN), IEEE, 19 February 2015 (2015-02-19), pages 242 - 247, XP032768942, DOI: 10.1109/SPIN.2015.7095294

## Description

### TECHNICAL FIELD

Embodiments presented herein relate to a method, a network node, a computer program, and a computer program product for channel state information quality triggered determination of autoregressive model order for a channel prediction filter.

### BACKGROUND

Multiple-input-multiple-output (MIMO) communication is a technique for a network (as represented by access network nodes) to serve several users (as represented by user equipment) simultaneously with the same time and frequency resource in a wireless communication network. This technique, in which the access network node and/or the user equipment are equipped with multiple antennas, enables spatial diversity when transmitting data in both uplink (UL; i.e., from the user equipment towards the access network node) and downlink (DL; i.e., from the access network node towards the user equipment) directions. The obtained spatial diversity increases the capacity of the network, or equivalently, offers a more efficient utilization of the frequency spectrum. Moreover, MIMO can reduce the inter-cell and intra-cell interferences, which in turn, leads to a denser frequency re-use pattern.

Effective deployment of the MIMO communication technology requires accurate estimation of the channel responses between the access network node and the user equipment in the associated network cell served by the access network node. The channel responses are defined by channel state information (CSI). The CSI provide information that is used when the beams from the access network node towards the intended user equipment are to be formed, for example for calculating weights for beamforming. The channel in the UL direction is commonly estimated using pilot symbols (such as reference signals) sent by the user equipment and received by the access network node. This is often called sounding and, can, for example be implemented by the user equipment transmitting sounding reference symbols.

For time division duplex (TDD)-based networks, it is possible to apply the physical channel property of reciprocity and use the UL sounding and channel estimation to obtain the DL channel estimates as well. The DL channel estimates, consequently, can be used to calculate the weights for the beamforming. Channel reciprocity assumes that the channel responses in the uplink and downlink directions are the same up to a change in the role of the transmitter and receiver and disregarding output power differences. Using this fact, channel reciprocity-based techniques use the estimated channel in the uplink direction for beamforming in the downlink. This principle holds when time-division multiplexing is used for sharing data transmission time between the DL and UL transmissions. In summary, in a reciprocity-based beamforming, from the previously transmitted pilot symbols from the user equipment towards the access network node, the UL channels are estimated, then these estimates will be valid in the DL direction by transposing the channel matrices. For channel reciprocity-based techniques, the accuracy of the CSI obtained at the access network node is crucial. If sufficiently accurate CSI can be obtained, then the beamforming towards the user equipment can be made precise. This can effectively improve the downlink transmission performance. But if the CSI is insufficiently accurate, the resulting beamforming gain will be degraded. Even though it is possible to obtain the CSI based on channel reciprocity from uplink channel estimation, the CSI accuracy can be impacted by channel estimation errors and outdating of the CSI delay due to mobility, or movement, of the user equipment.

Some reasons, as to why the estimated channel, and thus the CSI, from uplink sounding may be outdated when applied for the downlink precoder used for downlink data transmission will be disclosed next.

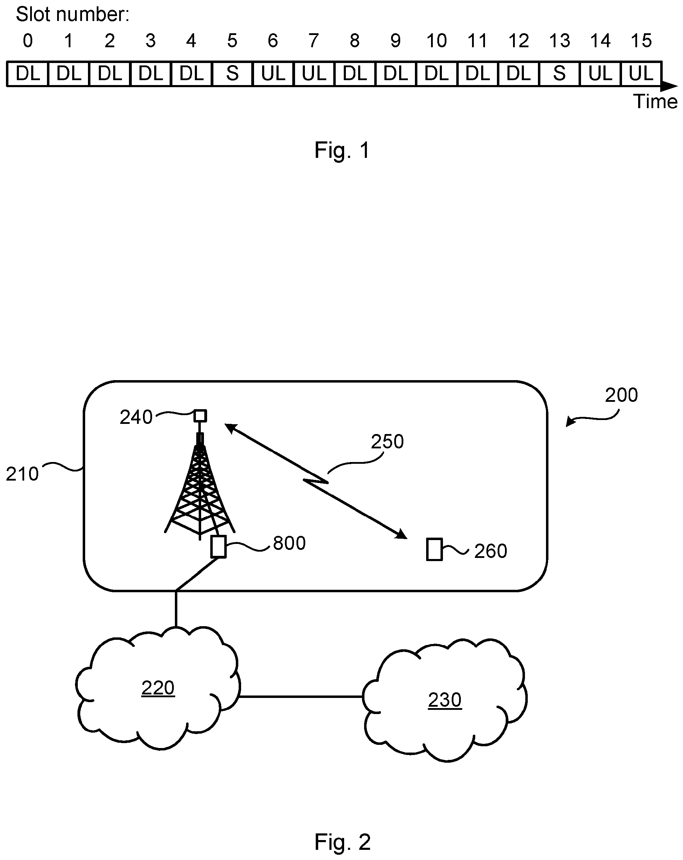

TDD transmission switches between downlink and uplink transmission in the time domain. For a downlink heavy TDD configurations, there are more downlink transmission timeslots than uplink transmission timeslots. The estimated channel based on uplink timeslots might therefore be outdated for the following downlink transmission slots. An example TDD pattern is shown in **Fig. 1,** where UL are uplink slots, DL are downlink slots and S are special slots. Here, timeslots with slot numbers 5, 6, 7 are possible for uplink channel estimation. The estimated channel might be outdated for the following timeslots, such as the timeslots with slot numbers 10, 11, 12 (or even for slot numbers 8, 9). The outdating will become increasingly more severe as time passes. That is, while the outdating may be tolerable for slot numbers 8, 9, by slot number 12, the estimated CSI may be impossible to use for MIMO purposes. When the number of user equipment that needs to transmit uplink reference signals signal grows large, it might be a challenge to allow every user equipment to transmit uplink reference signals during a single uplink transmission occasion. One reason behind this is that the uplink reference signals transmission capacity of each uplink transmission occasion is limited. In other words, to allow more user equipment to have uplink reference signals transmission opportunities, the network needs to increase the uplink reference signals transmission periodicity. As a bi-product, for each user equipment, two uplink reference signals transmission occasions will be far apart. For example, the uplink reference signals transmission periodicity may be configured as 20 milliseconds, even though every 5ms there may be uplink transmission occasion.

The extent of the severity of the CSI outdating caused by the abovementioned reasons further depends on the speed at which the user equipment is moving. If the user equipment is stationary, then the channel is likely to remain close to constant during a long period of time and the outdating will generally not be an issue. However, when the user equipment is moving, the CSI experienced by the user equipment will be changing timeslot by timeslot.

One aspect of a typical channel prediction algorithm is the ability to understand the channel dynamics in time. Autoregressive (AR) models stand as one of the commonly used models for time correlation modelling.

US 2007/0092012 A1 discloses a time-based channel prediction at a base station using an autoregressive, AR, model defining a channel prediction filter of order p.

The article by Baruah Murchana et al: "AR-model of faded MIMO set-up optimized for ITU channels", 2015 2nd International Conference on Signal Processing and Integrated Networks (SPIN), IEEE, 19 February 2015, pages 242-247, XP032768942, DOI: 10.1109/SPIN.2015.7095294 pertains to AR model based prediction of highly faded MIMO channels. An observation is made that a BER to be attained is a deciding factor for determining the AR model order. However, how to in practice estimate the coefficients of AR model serves as a challenging issue, and the quality of the estimation is tied with the channel prediction performance for those algorithms which are built based on AR modelling. As a follow-up application of the AR modelling, the theoretical foundation of prediction filters has been well studied. For instance, Kalman filter and sequential Wiener filter are commonly proposed and analyzed in literature. However, when to apply it for the channel prediction, and how to apply it in practice is still unclear for scenarios with moving user equipment. Hence, there is still a need for improved channel prediction techniques for wireless networks.

## SUMMARY

An object of embodiments herein is to enable accurate channel prediction techniques for wireless networks.

According to the embodiments disclosed hereinafter, accurate channel prediction is achieved by first determining the AR model order for the channel prediction filter in the AR model.

According to a first aspect there is therefore presented a method for CSI quality triggered determination of AR model order for a channel prediction filter. The method is performed by a network node. The method comprises obtaining an indication of declining CSI quality in a radio environment. The method comprises, in response thereto, obtaining an estimation of current channel conditions in the radio environment. The method comprises determining the AR model order based on the estimation of current channel conditions. The method comprises performing channel prediction of the radio environment using the channel prediction filter. The channel prediction filter is defined by an AR model having the determined AR model order.

According to a second aspect there is therefore presented a network node for CSI quality triggered determination of AR model order for a channel prediction filter. The network node comprises processing circuitry. The processing circuitry is configured to cause the network node to obtain an indication of declining CSI quality in a radio environment. The processing circuitry is configured to cause the network node to, in response thereto, obtain an estimation of current channel conditions in the radio environment. The processing circuitry is configured to cause the network node to determine the AR model order based on the estimation of current channel conditions. The processing circuitry is configured to cause the network node to perform channel prediction of the radio environment using the channel prediction filter. The channel prediction filter is defined by an AR model having the determined AR model order.

According to a third aspect there is therefore presented a network node for CSI quality triggered determination of AR model order for a channel prediction filter. The network node comprises an obtain module configured to obtain an indication of declining CSI quality in a radio environment. The network node comprises an obtain module configured to, in response to the indication being obtained, obtain an estimation of current channel conditions in the radio environment. The network node comprises a determine module configured to determine the AR model order based on the estimation of current channel conditions. The network node comprises a predict module configured to perform channel prediction of the radio environment using the channel prediction filter. The channel prediction filter is defined by an AR model having the determined AR model order.

According to a fourth aspect there is therefore presented a computer program for CSI quality triggered determination of AR model order for a channel prediction filter, the computer program comprising computer program code which, when run on a network node, causes the network node to perform a method according to the first aspect.

According to a fifth aspect there is therefore presented a computer program product comprising a computer program according to the fourth aspect and a computer readable storage medium on which the computer program is stored. The computer readable storage medium could be a non-transitory computer readable storage medium.

Advantageously, these aspects provide accurate determination of the AR model order for the channel prediction filter.

Advantageously, in turn, these aspects enable accurate channel prediction techniques for wireless networks.

Advantageously, in turn, based on accurate channel prediction, the performance in reciprocity-based wireless networks can be improved.

Advantageously, these aspects enable radio resource management to be more robust against mobility of the user equipment.

Other objectives, features and advantages of the enclosed embodiments will be apparent from the following detailed disclosure, from the attached dependent claims as well as from the drawings.

Generally, all terms used in the claims are to be interpreted according to their ordinary meaning in the technical field, unless explicitly defined otherwise herein. All references to "a/an/the element, apparatus, component, means, module, step, etc." are to be interpreted openly as referring to at least one instance of the element, apparatus, component, means, module, step, etc., unless explicitly stated otherwise. The steps of any method disclosed herein do not have to be performed in the exact order disclosed, unless explicitly stated.

## BRIEF DESCRIPTION OF THE DRAWINGS

The inventive concept is now described, by way of example, with reference to the accompanying drawings, in which:

Fig. 1 schematically illustrates an example TDD pattern;

Fig. 2 is a schematic diagram illustrating a wireless network according to embodiments;

Figs. 3 and 5 are flowcharts of methods according to embodiments;

Fig. 4 shows simulation results according to embodiments;

Fig. 6 is a schematic diagram showing functional units of a network node according to an embodiment;

Fig. 7 is a schematic diagram showing functional modules of a network node according to an embodiment; and

Fig. 8 shows one example of a computer program product comprising computer readable storage medium according to an embodiment.

## DETAILED DESCRIPTION

The inventive concept will now be described more fully hereinafter with reference to the accompanying drawings, in which certain embodiments of the inventive concept are shown. This inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description. Any step or feature illustrated by dashed lines should be regarded as optional.

AR models are widely used to model the dynamics of a random process. Consider a scalar channel model denoted by $h_t$. The channel fading can be modelled by an AR model as follows:

$$h_t = -a_1 h_{t-1} - a_2 h_{t-2} - \cdots - a_p h_{t-p} + e_t$$

where $p$ is the model order, $a_i$ is the $i$:th model coefficient, and $e_t$ is the modelling error. Once these parameters are known, there exist multiple filter designs to obtain the estimates of $h_t$, based on $h_{t-1}, \ldots, h_{t-p}$, via channel extrapolation. In what follows, the Kalman filter is one non-limiting example. The theoretical foundation of the Kalman filter starts from the state-space model. A state-space model in the context of channel prediction is here presented. Considering a state model with for one subcarrier, one receiving antenna (or beam), and one uplink reference signal port, the state-space model may be formulated as follows:

$$X_{t+1} = AX_t + Be_{t+1}$$

$$h_t = CX_t$$

$$y_t = h_t + v_t$$

where $X_t$ is a latent variable with dimension [p x 1], $e_t$ represent the scalar process noise which is assumed to be a random variable with Gaussian distribution (o, $R_{e_t}$), *A, B, C* are state transition matrices with dimensions [p x p], [p x 1], and [1 x p], respectively, $h_t$ is a scalar channel coefficient, $y_t$ is a scalar measurement (estimate from the one shot uplink reference signal channel estimator), and $v_t$ is scalar measurement noise (estimation error) which is assumed to be a random variable with Gaussian distribution (o, $R_{v_t}$).

In the context of channel prediction, an estimate of $h_{t+1}$ is to be formed via a prediction of $X_{t+1}$, based on the current estimation on $h_t$ and $X_t$. This procedure is termed a Kalman updating procedure.

The state-space matrices can be set up on different forms. One way to set up the state-space model is as follows. Let $X_t = [h_t, ..., h_{t-p+1}]^T$, then the state model (not necessarily unique) above follows directly by substitution as follows:

$$A = \begin{bmatrix} -a_1 & -a_2 & & -a_{p-1} & -a_p \\ 1 & & \cdots & & \\ & 1 & & & \\ & \vdots & \ddots & & \vdots \\ & & \cdots & & 1 \end{bmatrix}, B = [1\ 0\ 0\ ... \ ]^T, C = [1\ 0\ 0\ ...].$$

The dimensioning of state-space matrices and transition matrices rely on the model order *p* that needs to be selected. The state transition matrices, which model the short time fading of the channel, also need to be estimated.

**Fig. 2** is a schematic diagram illustrating a wireless network 200 where embodiments presented herein can be applied. The wireless network 200 could be a third generation (3G) telecommunications network, a fourth generation (4G) telecommunications network, a fifth generation (5G) telecommunications network, or any evolvement thereof, and support any 3GPP telecommunications standard, where applicable. The wireless network 200 could alternatively be a non-cellular and/or a non-3GPP network, such as an IEEE 802.11 communications network, or any other wireless IEEE compliant communications network. In some examples, the wireless network 200 is a massive MIMO system. The wireless network 200 comprises a network node 800 provided n a (radio) access network 210. The network node 800 is configured to, via an access network node 240 (such as a transmission and reception point), provide network access to user equipment 260, in a radio environment 250. The (radio) access network 210 is operatively connected to a core network 220. The core network 220 is in turn operatively connected to a service network 230, such as the Internet. The user equipment 260 is thereby enabled to, via the access node 800 and its access network node 240, access services of, and exchange data with, the service network 230. Examples of network nodes 800 are radio access network nodes, radio base stations, base transceiver stations, Node Bs, evolved Node Bs, gNBs, access points, and integrated access and backhaul nodes. Examples of user equipment 260 are wireless devices, mobile stations, mobile phones, handsets, wireless local loop phones, smartphones, laptop computers, tablet computers, network equipped sensors, network equipped vehicles, and so-called Internet of Things devices.

As noted above there is still a need for improved channel prediction techniques for wireless networks.

The embodiments disclosed herein therefore relate to techniques for CSI quality triggered determination of AR model order for a channel prediction filter. In order to obtain such mechanisms there is provided a network node 800, a method performed by the network node 800, a computer program product comprising code, for example in the form of a computer program, that when run on a network node 800, causes the network node 800 to perform the method.

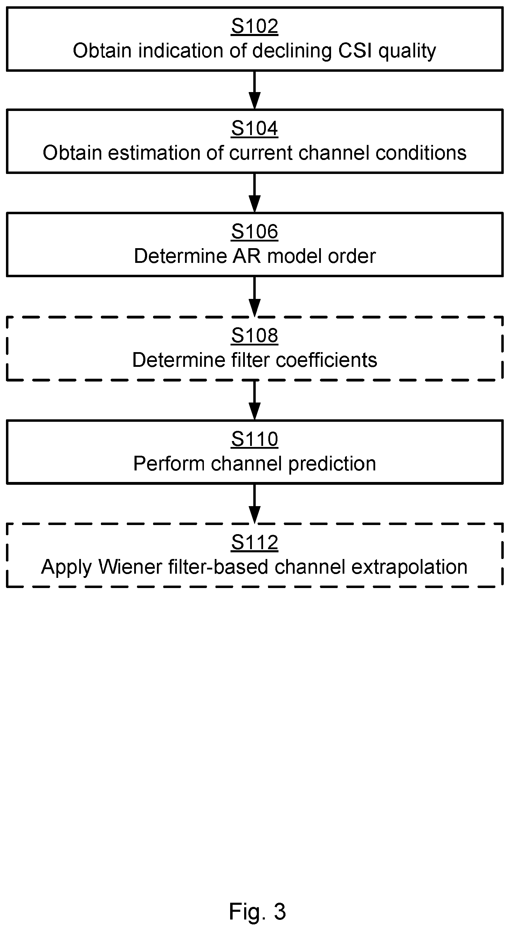

The herein disclosed embodiments are based on selecting the AR model order (i.e., the parameter *p* described above) used by channel prediction filter. **Fig. 3** is a flowchart illustrating embodiments of methods for CSI quality triggered determination of AR model order for a channel prediction filter. The methods are performed by the network node 800. The methods are advantageously provided as computer programs 1020.

The CSI quality is monitored. An indicator of declining CSI quality serves as a trigger for model order (re-) selection and the (re-)initialization of the channel prediction filter.

S102: The network node 800 obtains an indication of declining CSI quality in a radio environment 250.

The AR model order is determined based on current channel conditions. Examples of current channel conditions will be disclosed below. The determined model order is used in the AR model coefficients for setting up the channel prediction filter.

In response to having obtained the indication, the network node performs S104, S106, and S110:

　　　S104: The network node 800 obtains an estimation of current channel conditions in the radio environment 250.

　　　S106: The network node 800 determines the AR model order based on the estimation of current channel conditions.

　　　S110: The network node 800 performs channel prediction of the radio environment 250 using the channel prediction filter, wherein the channel prediction filter is defined by an AR model having the determined AR model order.

Embodiments relating to further details of CSI quality triggered determination of AR model order for a channel prediction filter as performed by the network node 800 will now be disclosed.

In some examples, the channel prediction is based on reciprocity assisted transmission. Reciprocity assisted transmission can be regarded as transmission based on channel state information obtained from estimates based on, or measurements made on, uplink reference signals

Aspects of how the network node 800 might obtain the indication of declining CSI quality in the radio environment 250 will be disclosed next.

In some embodiments, the indication of declining CSI quality is defined by at least one of: negative acknowledgements (NACKs), rank indication (RI), channel quality indicator (CQI), received from served user equipment 260 in the radio environment 250. In some aspects, the network node 800 monitors at least the acknowledgements (ACKs) or NACKs, RI, and/or CQI from feedback information to decide if a (new) process of AR model order selection is triggered. In some examples, if the network node 800 detects a trend of receiving more NACKs in the recent feedback, this is an indication of declining CSI quality. Hence, in some embodiments, the indication represents that number of received NACKs within a first time window is higher than a first threshold value, and/or the indication represents a rate at which the number of received NACKs increases within a second time window is higher than a second threshold value. In some examples, if the network node 800 detects a trend of declining RI or/and CQI in the recent feedback information, this is an indication of declining CSI quality. Hence, in some embodiments, the indication represents that the RI and/or CQI is lower than a third threshold value, and/or the indication represents a rate at which the RI and/or CQI decreases within a third time window is higher than a fourth threshold value. In some examples, if the network node 800 detects a trend of declining quality in the recent UL CSI estimation by for example the estimation of SRS based channel estimation quality, this is an indication of declining CSI quality. Hence, in some embodiments, the CSI quality is estimated from uplink reference signals received from served user equipment 260 in the radio environment 250.

There could be different examples of the current channel conditions. In some non-limiting examples, the current channel conditions are defined by at least one of: Doppler shift, signal to noise ratio (SNR), line-of-sight (LOS) or non-LOS (NLOS) classification, channel angular spread of the radio environment 250. The estimation of current channel conditions can be performed periodically, e.g. every $N$ milliseconds.

Aspects of how the network node 800 might determine the AR model order will be disclosed next.

In some examples, the doppler shift (or speed of the user equipment) and the SNR are estimated. One way is to use two reference signal symbols in one timeslot to perform an estimation of the doppler shift. The reference signals can e.g. be uplink demodulated reference signal (DMRS) or sounding reference signal (SRS). Denote the estimated doppler shift by $f_s$, and the SRS transmission periodicity by $T_{srs}$. The estimation of the SNR may also be based on one reference signal, e.g., UL DMRS or SRS. Denote the estimated SNR by $\rho$ [dB]. Further, assume a predefined SNR threshold $\beta$ [dB]. In some examples, one or more of the following rules are applied to determine the AR model order.

If $T_{srs} > k/(2 \cdot |f_s|)$, where $k$ is a positive constant, set $p = 0$. In particular, in some embodiments, the AR model order is determined to be equal to zero when periodicity of uplink reference signals is higher than a fifth threshold value, where the fifth threshold value is a function of the Doppler shift.

If $\rho < \beta$, set $p = 0$. In particular, in some embodiments, the AR model order is determined to be equal to zero when the SNR is lower than a sixth threshold value.

If $T_{srs} \leq k/(2 \cdot |f_s|)$ and $\rho > \beta$, set $p > 0$.

Further aspects of how to determine the AR model when $p > 0$ will be disclosed next.

In some embodiments, the AR model order increases with increasing angular spread. The AR model order might be higher for NLOS classification of the radio environment 250 than for LOS classification of the radio environment 250. A set of AR model orders can be predefined, such that $p \in \{p_1, p_2, p_3, \ldots, p_M\}$, where $M$ represents the number of current channel conditions to consider. In some of the illustrative examples that will be disclosed next, the following order set is considered: $p \in \{p_1, p_2, p_3, p_4\}$. The elements in the set are not necessarily unique (e.g., it could be that $p_1 = p_2$).

When the channel is classified as LOS and the angular spread is classified as small, set the AR model order as $p_1$. When channel is classified as NLOS and the angular spread is classified as small, set the AR model order as $p_2$. When channel is classified as LOS and the angular spread is classified as large, set the AR model order as $p_3$. When channel is classified as NLOS and the angular spread is classified as large, set the AR model order as $p_4$.

Examples of how to determine whether the channel is classified as LOS or NLOS will be disclosed next.

According to a first example, every $N$ milliseconds, the network node 800 obtains a single-shot channel estimation based on received uplink reference signals. During the channel estimation procedure based on the received uplink reference signals, the network node 800 performs a discrete cosine transformation (DCT) operation on the received signal after application of a matching filter in the frequency domain. In DCT domain, the network node 800 calculates the power of each channel tap. Denote the power of the strongest channel tap as $P_0$, and the average power of all the remaining taps as $P_i$. If $P_0/P_i$ is larger than a pre-defined threshold, then the channel is classified as LOS, and otherwise the channel is classified as NLOS.

According to a second example, it is possible to calculate the ratio of $P_0/P_i$ for each transmission of uplink reference signals. The network node 800 could then calculate the ratio of $P_0/P_i$ for $M$ transmission occasions of uplink reference signals. If during the $M$ transmission occasions the ratio of $P_0/P_i$ is larger than a pre-defined threshold in a total of $K$ transmission occasions, then the channel is classified as LOS channel. The value of both $M$ and $K$ can be pre-defined constants.

Examples of how to determine whether the angular spread is classified as small or large will be disclosed next.

According to a first example, for the channel estimation based on the latest transmission occasion of uplink reference signals, the network node 800 can calculate the frequency domain channel covariance matrix. The network node 800 can then apply eigenvalue decomposition to the channel covariance matrix to obtain the eigenvalues. Denote the largest eigenvalue as $E_0$, and the second largest eigenvalue as $E_1$. If the ratio $E_0/E_1$ is larger than a pre-defined threshold, then the angular spread of the channel is classified as small angular spread. Otherwise, the angular spread of the channel is classified as large angular spread.

According to a second example, it is possible for the network node 800 to calculate the frequency domain channel covariance matrix for each transmission occasion of uplink reference signals. The network node 800 can then calculate the weighted sum of frequency domain channel covariance matrix for $M$ transmission occasions of uplink reference signals. The network node 800 could then apply eigenvalue decomposition to the channel covariance matrix to obtain the eigenvalues. Denote the largest eigenvalue as $E_0$, and the second largest eigenvalue as $E_1$. If the ratio $E_0/E_1$ is larger than a pre-defined threshold, then the angular spread of the channel is classified as small angular spread. Otherwise, the angular spread of the channel is classified as large angular spread.

In some aspects, the determined model order is used when estimating AR model coefficients. That is, in some examples, the AR model further defines filter coefficients of the channel prediction filter. In some embodiments, the network node 800 is configured to perform (optional) step S108:

S108: The network node 800 determines the filter coefficients of the channel prediction filter as a function of the determined AR model order.

In some examples, the filter coefficients are based on historical estimates of received uplink reference signals or are pre-defined (e.g., as defined by filters in a filter bank). In particular, in some embodiments, the filter coefficients are determined either as a function of historically received uplink reference signals from served user equipment 260 in the radio environment 250 or are selected from a filter bank of pre-configured channel prediction filters.

In some examples, once the model order $p$ is determined in S106, the model coefficients $a_1, \dots a_p$ can be estimated by solving the Yule-Walker equation:

$$\begin{bmatrix} R_h(1) \\ R_h(2) \\ R_h(p) \end{bmatrix} = - \begin{bmatrix} R_h(0) & R_h^*(1) & \dots & R_h^*(p-1) \\ R_h(1) & R_h(0) & \dots & R_h^*(p-2) \\ & & \dots & \\ R_h(p-1) & R_h(p-2) & \dots & R_h(0) \end{bmatrix} \begin{bmatrix} a_1 \\ a_2 \\ a_p \end{bmatrix}$$

where $R_h(t)$ is the discrete time auto-correlation coefficient for the channels with a time difference $t$, which can be estimated based on the channel measurements samples received historically. Solving for the model coefficients, this can in matrix form be expressed as:

$$a = -R^{-1}r,$$

where

$$R = \begin{bmatrix} R_h(0) & R_h^*(1) & \dots & R_h^*(p-1) \\ R_h(1) & R_h(0) & \dots & R_h^*(p-2) \\ & & \dots & \\ R_h(p-1) & R_h(p-2) & \dots & R_h(0) \end{bmatrix},$$

and

$$r = \begin{bmatrix} R_h(1) \\ R_h(2) \\ R_h(p) \end{bmatrix}, a = \begin{bmatrix} a_1 \\ a_2 \\ a_p \end{bmatrix}.$$

In another example, the filter coefficients are precalculated and stored in the system. Depending on the determined model order in the set $p \in \{p_1, p_2, p_3, \ldots, p_M\}$, the corresponding filter coefficients can be selected.

Aspects of how to perform channel prediction based on the determined AR model order will be disclosed next.

In some aspects, a state-space model is constructed and the state transition matrices are estimated based on historical estimates of the uplink reference signals. Kalman filter-based channel prediction might be applied afterwards. The Kalman filtering and prediction implementation might follow various approaches in the literature. In other aspects, Wiener filter-based channel extrapolation is applied based on the determined model order and the estimated AR model coefficients.

In some aspects, Wiener filter-based channel extrapolation is applied based on the determined model order and the estimated AR model coefficients. Particularly, in some embodiments, the network node 800 is configured to perform (optional) step S112:

S112: The network node 800 applies Wiener filter-based channel extrapolation based on the determined AR model order and filter coefficients.

In a detailed Wiener filter extrapolation implementation, the selected model order can be used directly in the Wiener-Hopf equations. For instance, let $\hat{h}_{t+1}$ be the predicted channel coefficient in the future, and $H_t$ be the measurements vector that can be exploited currently, the Wiener-Hopf equations directly renders the formulation of the channel prediction as follows:

$$\hat{h}_{t+1} = R_{hH} \, R_{HH}{}^{-1} H$$

where $R_{hH}$, $R_{HH}$ represent the correlation vector, or matrix, of the prediction and measurements, and the measurements itself, respectively. The determined model order defines the dimension of the matrices $R_{hH}$, $R_{HH}$ by specifying which measurement instances can be used to form the prediction.

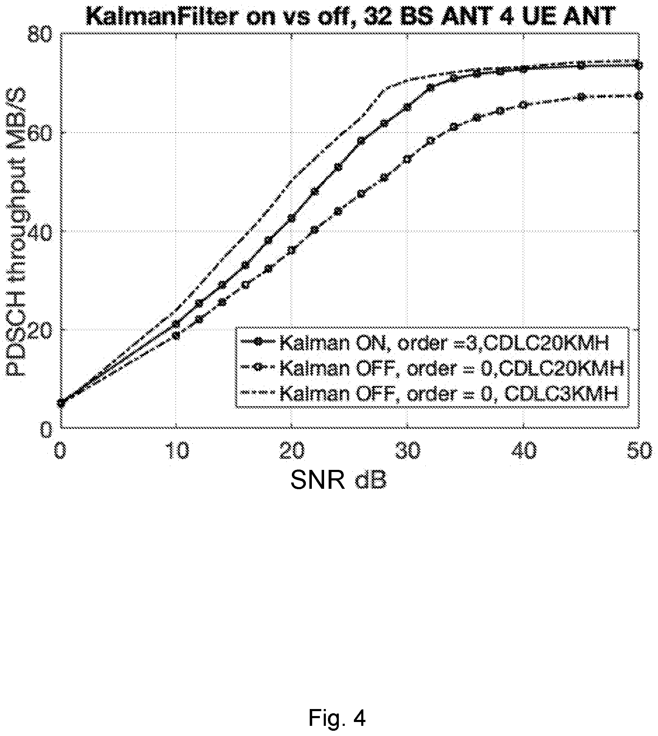

The herein disclosed embodiments together with Kalman filter have been verified by link level simulations. The channel prediction filter has been used in the beamforming enhancement for moving user equipment. To illustrate the performance gain, simulation results will be disclosed next with reference to Figs. 4, 5, 6 which show downlink performance in terms of throughput of a physical downlink shared channel (PDSCH) for single-user MIMO (SU-MIMO) reciprocity-based transmission.

**Fig. 4** shows the performance in clustered delay line channel CDL-C for a user equipment moving at speed of 3km/h and a user equipment moving at a speed of 20km/h. It can be seen that the performance is improved for the user equipment moving at a speed of 20km/h when the herein disclosed embodiments are applied.

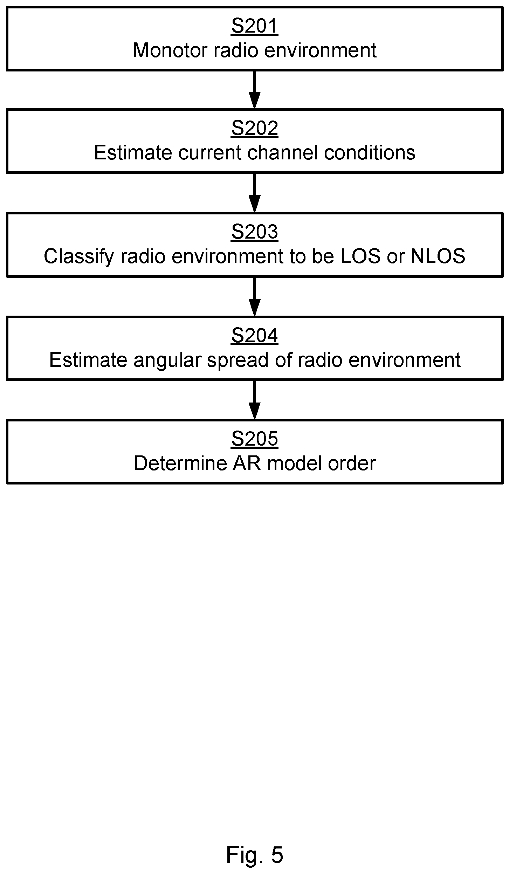

**Fig. 5** is a flowchart illustrating an embodiment of a method for CSI quality triggered determination of AR model order for a channel prediction filter as performed by the network node 800 in accordance with at least some of the above disclosed embodiments, aspects, and examples.

S201: The network node 800 monitors the radio environment 250, for example in terms of CSI in the form of NACKs, RI, CQI for identifying declining CSI quality in the radio environment 250.

S202: The network node 800 estimates current channel conditions, in terms of Doppler shift and SNR, in the radio environment 250.

S203: The network node 800 classifies the radio environment 250 to be either LOS or NLOS.

S204: The network node 800 estimates the angular spread of the radio environment 250.

S205: The network node 800 determines the AR model order based on the estimation of current channel conditions, whether the radio environment 250 is LOS or NLOS, and based on the angular spread of the radio environment 250.

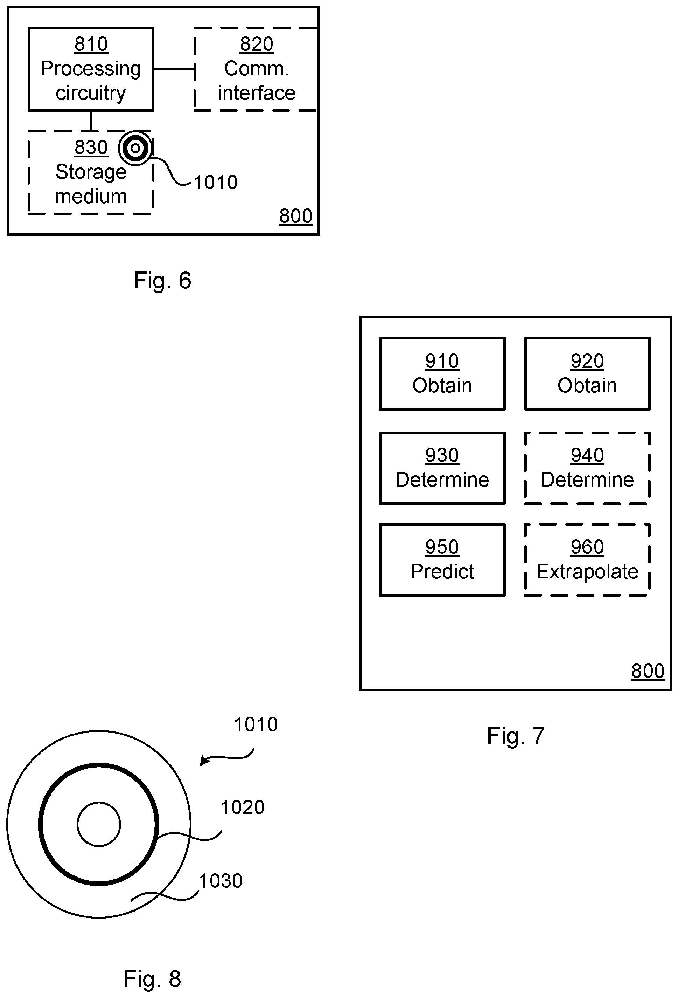

**Fig. 6** schematically illustrates, in terms of a number of functional units, the components of a network node 800 according to an embodiment. Processing circuitry 810 is provided using any combination of one or more of a suitable central processing unit (CPU), multiprocessor, microcontroller, digital signal processor (DSP), etc., capable of executing software instructions stored in a computer program product 1010 (as in Fig. 8), e.g. in the form of a storage medium 830. The processing circuitry 810 may further be provided as at least one application specific integrated circuit (ASIC), or field programmable gate array (FPGA).

Particularly, the processing circuitry 810 is configured to cause the network node 800 to perform a set of operations, or steps, as disclosed above. For example, the storage medium 830 may store the set of operations, and the processing circuitry 810 may be configured to retrieve the set of operations from the storage medium 830 to cause the network node 800 to perform the set of operations. The set of operations may be provided as a set of executable instructions.

Thus the processing circuitry 810 is thereby arranged to execute methods as herein disclosed. The storage medium 830 may also comprise persistent storage, which, for example, can be any single one or combination of magnetic memory, optical memory, solid state memory or even remotely mounted memory. The network node 800 may further comprise a communications interface 820 at least configured for communications with other entities, functions, nodes, and devices. As such the communications interface 820 may comprise one or more transmitters and receivers, comprising analogue and digital components. The processing circuitry 810 controls the general operation of the network node 800 e.g. by sending data and control signals to the communications interface 820 and the storage medium 830, by receiving data and reports from the communications interface 820, and by retrieving data and instructions from the storage medium 830. Other components, as well as the related functionality, of the network node 800 are omitted in order not to obscure the concepts presented herein.

**Fig. 7** schematically illustrates, in terms of a number of functional modules, the components of a network node 800 according to an embodiment. The network node 800 of Fig. 7 comprises a number of functional modules; an obtain module 910 configured to perform step S102, an obtain module 920 configured to perform step S104, a determine module 930 configured to perform step S106, and a predict module 950 configured to perform step S110. The network node 800 of Fig. 7 may further comprise a number of optional functional modules, such as any of a determine module 940 configured to perform step S108, and an extrapolate module 960 configured to perform step S112. In general terms, each functional module 910:960 may in one embodiment be implemented only in hardware and in another embodiment with the help of software, i.e., the latter embodiment having computer program instructions stored on the storage medium 830 which when run on the processing circuitry makes the network node 800 perform the corresponding steps mentioned above in conjunction with Fig 9. It should also be mentioned that even though the modules correspond to parts of a computer program, they do not need to be separate modules therein, but the way in which they are implemented in software is dependent on the programming language used. Preferably, one or more or all functional modules 910:960 may be implemented by the processing circuitry 810, possibly in cooperation with the communications interface 820 and/or the storage medium 830. The processing circuitry 810 may thus be configured to from the storage medium 830 fetch instructions as provided by a functional module 910:960 and to execute these instructions, thereby performing any steps as disclosed herein.

The network node 800 may be provided as a standalone device or as a part of at least one further device. For example, the network node 800 may be provided in a node of the radio access network or in a node of the core network. Alternatively, functionality of the network node 800 may be distributed between at least two devices, or nodes. These at least two nodes, or devices, may either be part of the same network part (such as the radio access network or the core network) or may be spread between at least two such network parts. In general terms, instructions that are required to be performed in real time may be performed in a device, or node, operatively closer to the cell than instructions that are not required to be performed in real time.

Thus, a first portion of the instructions performed by the network node 800 may be executed in a first device, and a second portion of the of the instructions performed by the network node 800 may be executed in a second device; the herein disclosed embodiments are not limited to any particular number of devices on which the instructions performed by the network node 800 may be executed. Hence, the methods according to the herein disclosed embodiments are suitable to be performed by a network node 800 residing in a cloud computational environment. Therefore, although a single processing circuitry 810 is illustrated in Fig. 6 the processing circuitry 810 may be distributed among a plurality of devices, or nodes. The same applies to the functional modules 910:960 of Fig. 7 and the computer program 1020 of Fig. 8.

**Fig. 8** shows one example of a computer program product 1010 comprising computer readable storage medium 1030. On this computer readable storage medium 1030, a computer program 1020 can be stored, which computer program 1020 can cause the processing circuitry 810 and thereto operatively coupled entities and devices, such as the communications interface 820 and the storage medium 830, to execute methods according to embodiments described herein. The computer program 1020 and/or computer program product 1010 may thus provide means for performing any steps as herein disclosed.

In the example of Fig. 8, the computer program product 1010 is illustrated as an optical disc, such as a CD (compact disc) or a DVD (digital versatile disc) or a Blu-Ray disc. The computer program product 1010 could also be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory. Thus, while the computer program 1020 is here schematically shown as a track on the depicted optical disk, the computer program 1020 can be stored in any way which is suitable for the computer program product 1010.

The inventive concept has mainly been described above with reference to a few embodiments. However, as is readily appreciated by a person skilled in the art, other embodiments than the ones disclosed above are equally possible within the scope of the invention, as defined by the appended patent claims.

**Claims**

1.   A method for channel state information, CSI, quality triggered determination of autoregressive, AR, model order for a channel prediction filter, the method being performed by a network node (800), the method comprising:
obtaining (S102) an indication of declining CSI quality in a radio environment (250); and in response thereto:

obtaining (S104) an estimation of current channel conditions in the radio environment (250);
determining (S106) the AR model order based on the estimation of current channel conditions; and
performing (S110) channel prediction of the radio environment (250) using the channel prediction filter, wherein the channel prediction filter is defined by an AR model having the determined AR model order.

2. The method according to claim 1, wherein the channel prediction is based on reciprocity assisted transmission.

3. The method according to any preceding claim, wherein the indication of declining CSI quality is defined by at least one of: negative acknowledgement, NACK, rank indication, RI, channel quality indicator, CQI, received from served user equipment (260) in the radio environment (250).

4. The method according to claim 3, wherein the indication represents that number of received NACKs within a first time window is higher than a first threshold value, and/or the indication represents a rate at which the number of received NACKs increases within a second time window is higher than a second threshold value.

5. The method according to claim 3, wherein the indication represents that the RI and/or CQI is lower than a third threshold value, and/or the indication represents a rate at which the RI and/or CQI decreases within a third time window is higher than a fourth threshold value.

6. The method according to any preceding claim, wherein the CSI quality is estimated from uplink reference signals received from served user equipment (260) in the radio environment (250).

7. The method according to any preceding claim, wherein the current channel conditions are defined by at least one of: Doppler shift, signal to noise ratio, SNR, line-of-sight, LOS, or non-LOS, NLOS, classification, channel angular spread of the radio environment (250).

8. The method according to claim 7 wherein the AR model order is determined to be equal to zero when periodicity of uplink reference signals is higher than a fifth threshold value, wherein the fifth threshold value is a function of the Doppler shift.

9. The method according to claim 7, wherein the AR model order is determined to be equal to zero when the SNR is lower than a sixth threshold value.

10. The method according to claim 7, wherein the AR model order increases with increasing angular spread.

11. The method according to claim 7, wherein the AR model order is higher for NLOS classification of the radio environment (250) than for LOS classification of the radio environment (250).

12. The method according to any preceding claim, wherein the AR model further defines filter coefficients of the channel prediction filter, and wherein the method further comprises:
determining (S108) the filter coefficients of the channel prediction filter as a function of the determined AR model order.

13. A network node (200) for channel state information, CSI, quality triggered determination of autoregressive, AR, model order for a channel prediction filter, the network node (200) comprising processing circuitry (810), the processing circuitry being configured to cause the network node (200) to:
obtain an indication of declining CSI quality in a radio environment (250); and in response thereto to:

obtain an estimation of current channel conditions in the radio environment (250);
determine the AR model order based on the estimation of current channel conditions; and
perform channel prediction of the radio environment (250) using the channel prediction filter, wherein the channel prediction filter is defined by an AR model having the determined AR model order.

14. A computer program (1020) for channel state information, CSI, quality triggered determination of autoregressive, AR, model order for a channel prediction filter, the computer program comprising computer code which, when run on processing circuitry (810) of a network node (200), causes the network node (200) to:

obtain (S102) an indication of declining CSI quality in a radio environment (250); and in response thereto to:

> obtain (S104) an estimation of current channel conditions in the radio environment (250);
> determine (S106) the AR model order based on the estimation of current channel conditions; and
> perform (S110) channel prediction of the radio environment (250) using the channel prediction filter, wherein the channel prediction filter is defined by an AR model having the determined AR model order.

15. A computer program product (1010) comprising a computer program (1020) according to claim 14, and a computer readable storage medium (1030) on which the computer program is stored.


**Patentansprüche**

1. Verfahren zur durch die Qualität von Kanalzustandsinformationen, CSI, ausgelösten Bestimmung einer autoregressiven, AR-, Modellordnung für ein Kanalvorhersagefilter, wobei das Verfahren von einem Netzwerkknoten (800) durchgeführt wird, wobei das Verfahren umfasst:
Erhalten (S102) einer Angabe abnehmender CSI-Qualität in einer Funkumgebung (250); und als Reaktion darauf:

> Erhalten (S104) einer Schätzung aktueller Kanalbedingungen in der Funkumgebung (250);
> Bestimmen (S106) der AR-Modellordnung basierend auf der Schätzung aktueller Kanalbedingungen; und
> Durchführen (S110) von Kanalvorhersage der Funkumgebung (250) unter Verwendung des Kanalvorhersagefilters, wobei das Kanalvorhersagefilter durch ein AR-Modell definiert ist, das die bestimmte AR-Modellordnung aufweist.

2. Verfahren nach Anspruch 1, wobei die Kanalvorhersage auf reziprozitätsunterstützter Übertragung basiert.

3. Verfahren nach einem vorstehenden Anspruch, wobei die Angabe abnehmender CSI-Qualität durch mindestens eines definiert ist von: negativer Bestätigung, NACK, Rangangabe, RI, Kanalqualitätsindikator, CQI, die von einer bedienten Benutzerausrüstung (260) in der Funkumgebung (250) empfangen werden.

4. Verfahren nach Anspruch 3, wobei die Angabe darstellt, dass die Anzahl empfangener NACKs innerhalb eines ersten Zeitfensters höher ist als ein erster Schwellenwert, und/oder die Angabe darstellt, dass eine Rate, mit der die Anzahl empfangener NACKs innerhalb eines zweiten Zeitfensters ansteigt, höher ist als ein zweiter Schwellenwert.

5. Verfahren nach Anspruch 3, wobei die Angabe darstellt, dass die RI und/oder der CQI niedriger ist als ein dritter Schwellenwert, und/oder die Angabe darstellt, dass eine Rate, mit der die RI und/oder der CQI innerhalb eines dritten Zeitfensters abnimmt, höher ist als ein vierter Schwellenwert.

6. Verfahren nach einem vorstehenden Anspruch, wobei die CSI-Qualität aus Uplink-Referenzsignalen geschätzt wird, die von einer bedienten Benutzerausrüstung (260) in der Funkumgebung (250) empfangen werden.

7. Verfahren nach einem vorstehenden Anspruch, wobei die aktuellen Kanalbedingungen durch mindestens eines definiert sind von: Dopplerverschiebung, Signal-Rausch-Verhältnis, SNR, Sichtlinien-, LOS-, oder Nicht-Sichtlinien, NLOS-Klassifizierung, Kanalwinkelstreuung der Funkumgebung (250).

8. Verfahren nach Anspruch 7, wobei bestimmt wird, dass die AR-Modellordnung gleich Null ist, wenn eine Periodizität von Uplink-Referenzsignalen höher ist als ein fünfter Schwellenwert, wobei der fünfte Schwellenwert von der Dopplerverschiebung abhängig ist.

9. Verfahren nach Anspruch 7, wobei bestimmt wird, dass die AR-Modellordnung gleich Null ist, wenn das SNR niedriger ist als ein sechster Schwellenwert.

10. Verfahren nach Anspruch 7, wobei die AR-Modellordnung mit zunehmender Winkelstreuung zunimmt.

11. Verfahren nach Anspruch 7, wobei die AR-Modellordnung bei NLOS-Klassifizierung der Funkumgebung (250) höher ist als bei LOS-Klassifizierung der Funkumgebung (250).

12. Verfahren nach einem vorstehenden Anspruch, wobei das AR-Modell weiter Filterkoeffizienten des Kanalvorhersagefilters definiert, und wobei das Verfahren weiter umfasst:
Bestimmen (S108) der Filterkoeffizienten des Kanalvorhersagefilters in Abhängigkeit von der bestimmten AR-Modellordnung.

13. Netzwerkknoten (200) zur durch Qualität von Kanalzustandsinformationen, CSI, ausgelösten Bestimmung einer autoregressiven, AR-, Modellordnung für ein Kanalvorhersagefilter, wobei der Netzwerkknoten (200) Verarbeitungsschaltungen (810) umfasst, wobei die Verarbeitungsschaltungen konfiguriert sind, um den Netzwerkknoten (200) zu veranlassen:
eine Angabe abnehmende CSI-Qualität in einer Funkumgebung (250) zu erhalten; und um als Reaktion darauf:

eine Schätzung aktueller Kanalbedingungen in der Funkumgebung (250) zu erhalten;
basierend auf der Schätzung aktueller Kanalbedingungen die AR-Modellordnung zu bestimmen; und
unter Verwendung des Kanalvorhersagefilters Kanalvorhersage der Funkumgebung (250) durchzuführen, wobei das Kanalvorhersagefilter durch ein AR-Modell definiert ist, das die bestimmte AR-Modellordnung aufweist.

14. Computerprogramm (1020) zur durch die Qualität von Kanalzustandsinformationen, CSI, ausgelösten Bestimmung einer autoregressiven, AR-, Modellordnung für ein Kanalvorhersagefilter, wobei das Computerprogramm einen Computercode umfasst, der, wenn er auf einer Verarbeitungsschaltung (810) eines Netzwerkknotens (200) ausgeführt wird, den Netzwerkknoten (200) veranlasst:
eine Angabe abnehmender CSI-Qualität in einer Funkumgebung (250) zu erhalten (S102); und um als Reaktion darauf:

eine Schätzung aktueller Kanalbedingungen in der Funkumgebung (250) zu erhalten (S104);
basierend auf der Schätzung aktueller Kanalbedingungen die AR-Modellordnung zu bestimmen (S106); und
unter Verwendung des Kanalvorhersagefilters Kanalvorhersage der Funkumgebung (250) durchzuführen (S110), wobei das Kanalvorhersagefilter durch ein AR-Modell definiert ist, das die bestimmte AR-Modellordnung aufweist.

15. Computerprogrammprodukt (1010), das ein Computerprogramm (1020) nach Anspruch 14 und ein computerlesbares Speichermedium (1030) umfasst, auf dem das Computerprogramm gespeichert ist.


**Revendications**

1. Procédé de détermination de l'ordre de modèle autorégressif, AR, déclenchée par la qualité des informations d'état de canal, CSI, pour un filtre de prédiction de canal, le procédé étant exécuté par un nœud de réseau (800), le procédé comprenant :
l'obtention (S102) d'une indication de baisse de qualité CSI dans un environnement radio (250) ; et en réponse à celle-ci :

l'obtention (S104) d'une estimation des conditions de canal actuelles dans l'environnement radio (250) ;
la détermination (S106) de l'ordre de modèle AR sur la base de l'estimation des conditions de canal actuelles ; et
l'exécution (S110) d'une prédiction de canal de l'environnement radio (250) à l'aide du filtre de prédiction de canal, dans lequel le filtre de prédiction de canal est défini par un modèle AR présentant l'ordre de modèle AR déterminé.

2. Procédé selon la revendication 1, dans lequel la prédiction de canal est basée sur une transmission assistée par réciprocité.

3. Procédé selon une quelconque revendication précédente, dans lequel l'indication de baisse de qualité CSI est définie par au moins l'un parmi : un accusé de réception négatif, NACK, une indication de rang, RI, un indicateur de qualité de canal, CQI, reçus de l'équipement d'utilisateur desservi (260) dans l'environnement radio (250).

4. Procédé selon la revendication 3, dans lequel l'indication représente le fait que le nombre de NACK reçus dans une première fenêtre temporelle est supérieur à une première valeur seuil, et/ou l'indication représente le fait qu'un taux auquel le nombre de NACK reçus augmente dans une deuxième fenêtre temporelle est supérieur à une deuxième valeur seuil.

5. Procédé selon la revendication 3, dans lequel l'indication représente le fait que la RI et/ou le CQI est inférieur(e) à une troisième valeur seuil, et/ou l'indication représente le fait qu'un taux auquel la RI et/ou le CQI diminue dans une troisième fenêtre temporelle est supérieur à une quatrième valeur seuil.

6. Procédé selon une quelconque revendication précédente, dans lequel la qualité CSI est estimée à partir de signaux de référence de liaison montante reçus de l'équipement d'utilisateur desservi (260) dans l'environnement radio (250).

7. Procédé selon une quelconque revendication précédente, dans lequel les conditions de canal actuelles sont définies par au moins l'un parmi : un décalage Doppler, un rapport signal sur bruit, SNR, une classification en visibilité direction, LOS, ou non-LOS, NLOS, une dispersion angulaire de canal de l'environnement radio (250).

8. Procédé selon la revendication 7, dans lequel l'ordre de modèle AR est déterminé comme étant égal à zéro lorsque la périodicité des signaux de référence de liaison montante est supérieure à une cinquième valeur seuil, dans lequel la cinquième valeur seuil dépend du décalage Doppler.

9. Procédé selon la revendication 7, dans lequel l'ordre de modèle AR est déterminé comme étant égal à zéro lorsque le SNR est inférieur à une sixième valeur seuil.

10. Procédé selon la revendication 7, dans lequel l'ordre de modèle AR augmente avec l'augmentation de la dispersion angulaire.

11. Procédé selon la revendication 7, dans lequel l'ordre de modèle AR est plus élevé pour la classification NLOS de l'environnement radio (250) que pour la classification LOS de l'environnement radio (250).

12. Procédé selon une quelconque revendication précédente, dans lequel le modèle AR définit en outre des coefficients de filtre du filtre de prédiction de canal, et dans lequel le procédé comprend en outre :
la détermination (S108) des coefficients de filtre du filtre de prédiction de canal en fonction de l'ordre de modèle AR déterminé.

13. Nœud de réseau (200) pour une détermination de l'ordre de modèle autorégressif, AR, déclenchée par la qualité des informations d'état de canal, CSI, pour un filtre de prédiction de canal, le nœud de réseau (200) comprenant un ensemble de circuits de traitement (810), l'ensemble de circuits de traitement étant configuré pour amener le nœud de réseau (200) à :
obtenir une indication de baisse de qualité CSI dans un environnement radio (250) ; et en réponse à celle-ci, à :

    obtenir une estimation des conditions de canal actuelles dans l'environnement radio (250) ;
    déterminer l'ordre de modèle AR sur la base de l'estimation des conditions de canal actuelles ; et
    effectuer une prédiction de canal de l'environnement radio (250) à l'aide du filtre de prédiction de canal, dans lequel le filtre de prédiction de canal est défini par un modèle AR présentant l'ordre de modèle AR déterminé.

14. Programme informatique (1020) de détermination de l'ordre de modèle autorégressif, AR, déclenchée par la qualité des informations d'état de canal, CSI, pour un filtre de prédiction de canal, le programme informatique comprenant un code informatique qui, lorsqu'il est exécuté sur un ensemble de circuits de traitement (810) d'un nœud de réseau (200), amène le nœud de réseau (200) à :
obtenir (S102) une indication de baisse de qualité CSI dans un environnement radio (250) ; et en réponse à celle-ci, à :

    obtenir (S104) une estimation des conditions de canal actuelles dans l'environnement radio (250) ;
    déterminer (S106) l'ordre de modèle AR sur la base de l'estimation des conditions de canal actuelles ; et
    effectuer (S110) une prédiction de canal de l'environnement radio (250) à l'aide du filtre de prédiction de canal, dans lequel le filtre de prédiction de canal est défini par un modèle AR présentant l'ordre de modèle AR déterminé.

15. Produit de programme informatique (1010) comprenant un programme informatique (1020) selon la revendication 14, et un support de stockage lisible par ordinateur (1030) sur lequel est stocké le programme informatique.

Slot number:

| 0 | 1 | 2 | 3 | 4 | 5 | 6 | 7 | 8 | 9 | 10 | 11 | 12 | 13 | 14 | 15 |
|---|---|---|---|---|---|---|---|---|---|----|----|----|----|----|----|
| DL | DL | DL | DL | DL | S | UL | UL | DL | DL | DL | DL | DL | S | UL | UL |

→ Time

## Fig. 1

## Fig. 2

Fig. 3

Fig. 4

**S201**
Monotor radio environment

**S202**
Estimate current channel conditions

**S203**
Classify radio environment to be LOS or NLOS

**S204**
Estimate angular spread of radio environment

**S205**
Determine AR model order

Fig. 5

**810**
Processing
circuitry

**820**
Comm.
interface

**830**
Storage
medium

1010

**800**

Fig. 6

**910**
Obtain

**920**
Obtain

**930**
Determine

**940**
Determine

**950**
Predict

**960**
Extrapolate

**800**

Fig. 7

1010

1020

1030

Fig. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20070092012 A1

**Non-patent literature cited in the description**

- AR-model of faded MIMO set-up optimized for ITU channels. **BARUAH MURCHANA et al.** 2015 2nd International Conference on Signal Processing and Integrated Networks (SPIN). IEEE, 19 February 2015, 242-247